# EUROPÄISCHE PATENTSCHRIFT

(11) **EP 1 564 432 B1**
(45) Veröffentlichungstag und Bekanntmachung des Hinweises auf die Patenterteilung: **31.03.2010**
(21) Anmeldenummer: 05001156.8
(22) Anmeldetag: 21.01.2005
(51) Int. Cl.: F16F 1/12, F16F 9/38

(54) **Federanordnung für ein Kraftfahrzeug und Federteller für eine solche Federanordnung**
Spring assembly for a vehicle and a spring seat for such a spring assembly
Dispositif à ressort pour un véhicule et une coupelle pour ce dispositif

(30) Priorität: 06.02.2004 DE 102004005812
(43) Veröffentlichungstag der Anmeldung: 17.08.2005
(73) Patentinhaber: AUDI AG, 85045 Ingolstadt (DE)
(72) Erfinder: Müller, Hugo, 86701 Rohrenfels-Ballersdorf (DE); Brandl, Hans Jürgen, 86706 Weichering (DE); Schmidt, Walter, 86643 Rennertshofen (DE)
(74) Vertreter: Asch, Konrad

(56) Entgegenhaltungen:
- US-A- 4 869 471
- US-A- 5 310 167
- US-A- 6 155 545

## Beschreibung

Die Erfindung betrifft eine Tragfederanordnung gemäß der im Oberbegriff des Patentanspruchs 1 angegebenen Art.

Solche Tragfederanordnungen umfassen in aller Regel jeweils eine zwischen Federtellern eingespannte Schraubenfeder, die während der Fahrt eines Kraftfahrzeuges Schlagbeanspruchungen ausgesetzt ist. Diese werden durch aufgewirbelte Steine und Schotter hervorgerufen und beeinträchtigen die Oberfläche der Schraubenfeder sowohl hinsichtlich eines aufgebrachten Oberflächenschutzes und führen auch zu Rissbildungen in der Schraubenfeder. Dies ist nachteilig für die Lebensdauer solcher Tragfederanordnungen.

Dokument US-A-6, 155, 545 zeigt eine Federanordnung gemäß dem Oberbegriff des Anspruchs 1.

Der Erfindung liegt daher die Aufgabe zugrunde, hier Abhilfe durch eine neue Gestaltung der Tragfederanordnung zu schaffen.

Diese Aufgabe wird erfindungsgemäß durch die Merkmale des Patentanspruches 1 gelöst.

Weitere Merkmale der Erfindung ergeben sich aus den Unteransprüchen.

Ausgehend von der Erkenntnis, dass es für einen wirksamen Schutz eines solchen Schraubenfeder gegen Schotterbeschuss und Steinschlag ausreicht, wenn diese von der Fahrtrichtung her geschützt wird, ist erfindungsgemäß eine in Fahrtrichtung des Kraftfahrzeuges vor der Feder liegende Schutzwand angeordnet, die von einer der beiden Federstützanordnungen getragen ist und sich über wenigstens eine Teillänge der Federlänge der Schraubenfeder erstreckt.

Vorteilhafter Weise ist die Schutzwand mit dem Rand eines als Federunterlage dienenden Basisteiles der Tragfederanordnung einteilig verbunden. Hierdurch wird eine einfache, stabile und kostengünstige Konstruktion erreicht, die wenig Bauraum beansprucht und sich gut integrieren lässt. Das mit der Schutzwand ausgestattete Basisteil ist - wie erwähnt - so montiert, dass die Schutzwand sich in der Fahrtrichtung vor der Feder befindet. Auf diese Weise werden die auf sie während der Fahrt geschleuderten Schotterteile und Steine abgefangen.

Bei den bekannten Tragfederanordnungen ist das als Federteller wirkende Basisteil zwischen der Schraubenfeder und einem Widerlager eingespannt, so dass die Schraubenfeder dadurch kraftschlüssig positioniert ist. Ein solcher Kraftschluss ist jedoch für die Schutzwand nicht verdrehsicher, insbesondere dann, wenn die Feder entspannt ist. Gemäß der Erfindung ist daher eine formschlüssige Verdrehsicherung vorgesehen, die eine dem Basisteil zugeordnete, der Bogenform des Endwendels der Feder angepasste Anlagefläche aufweist, an der der Endwendel der Feder zumindest teilweise anliegt, sodass das die Schutzwand tragende Basisteil unverdrehbar seine vorbestimmte Lage behält.

Die Lagesicherung kann aber auch durch einen zentrischen aber unrunden Zapfen des Radträgers gebildet sein, mit dem eine im Basisteil angeordnete korrespondierende Ausnehmung zusammen wirkt. Beiden Ausführungsformen ist gemeinsam, dass sie eine belastbare und sichere Verdrehsicherung bilden.

Es trägt zur Stabilisierung der Schutzwand bei, wenn diese um die Mittelachse des Basisteils gekrümmt ist. Die Schutzwand kann gleich breit oder breiter als das Basisteil ausgebildet sein. Die aus einem elastisch verformbarem Material bestehende Federunterlage nach der Erfindung bildet infolge der größeren Masse ein besseres Dämpfungselement gegen Stöße als bisher. Hierzu kann die Elastizität der Federunterlage größer als die der Schutzwand ausgebildet sein.

Die Lebensdauer und auch die Festigkeit und Formstabilität der Schutzwand lässt sich durch auf deren Außenseite nebeneinander angeordnete Außenschutzwände vergrößern, die in einem Abstand von der Außenfläche der Schutzwand angeordnet sind und die jeweils an punktuellen oder linienförmigen Verbindungsstegen mit der Schutzwand verbunden sind. Außerdem lässt sich die Formstabilität durch eine Armierung der Schutzwand vergrößern.

Es ist zwar bekannt, bei einem Luftfedersystem die Luftfederkolben gegen Beschädigungen durch Steinschlag mit einem dünnwandigen Schutzfaltenbalg zu umgeben. Infolge des unterschiedlichen Aufbaus solcher sogenannter Mc-Pherson-Federbeine bildenden Luftfedersysteme - diese sind als Radführungselemente ausgebildet und daher nicht direkt Schotter- und Steinschlag ausgesetzt - ist eine einfache Übertragung auf Tragfederanordnungen mit auf einem Radträger sich abstützenden Schraubenfedern nicht möglich.

Die Erfindung ist nachfolgend an Hand eines in der Zeichnung dargestellten Ausführungsbeispiels beschrieben. Im Einzelnen zeigen:
- Fig. 1: eine Seitenansicht einer erfindungsgemäßen Tragfederanordnung für ein Kraftfahrzeug, insbesondere für ein Personenkraftfahrzeug, mit einem erfindungsgemäß ausgestalteten Federteller, und
- Fig. 2: eine Vorderansicht der Tragfederanordnung nach Fig. 1

Die wesentlichen Elemente der in ihrer Gesamtheit mit 10 bezeichneten Tragfederanordnung sind ein, eine Federanterlage ausbildende, Federteller 12, eine Tragfeder 14 und ein, eine Federantlage ausbildende, Radträger 16, wobei der Federteller 12 zwischen dem Radträger 16 und der Tragfeder 14 angeordnet ist. Beim Ausführungsbeispiel ist der Federteller 12 unter der Tragfeder 14 angeordnet, wobei er das untere Federende der Tragfeder 14 stützt. Die Abstützung des gegenüberliegenden, hier des oberen, Federendes ist aus Vereinfachungsgründen nicht dargestellt. Die Tragfeder 14 liegt an der hier oberseitigen Federanlageseite 12a des Federtellers 12 an diesem an, wobei der Federteller 12 mit seiner hier unterseitigen Widerlagerseite 12b auf dem Radträger 16 abgestützt ist.

Ein weiteres wesentliches Element der erfindungsgemäßen Tragfederanordnung 10 ist eine Schutzwand 18, die sich mit einer selbsttragenden Festigkeit jedoch elastisch vor der Tragfeder 14 von einem der beiden Tragfederenden her, hier vom unteren Tragfederende her, über wenigstens einen Teil L1 der Länge L2 der Tragfeder 12 erstreckt und ein Schutzschild für die Tragfeder 14 bildet. Beim Ausführungsbeipiel ist die Schutzwand 18 stehend angeordnet. Außerdem ist sie mit dem Federteller 12 verbunden und von diesem gehalten, wobei sie mit diesem vorzugsweise einteilig verbunden ist.

Der Federteller 12 weist ein Basisteil 20 in der Form einer z. B. runden Scheibe oder Platte auf, deren Widerlagerseite 12b eben ausgebildet sein kann. Auch die hier oberseitige Seitenfläche der Federanlageseite 12a kann eben ausgebildet sein. Beim Ausführungsbeispiel ist die Federanlageseite 12a in besonderer Weise an das ihr zugewandte Ende der Tragfeder 14 angepasst, was weiter unten noch beschrieben wird.

Um ein seitliches Verrutschen des Federtellers 12 relativ zum Radträger 16 zu vermeiden, ist eine formschlüssig wirksame Zentriervorrichtung 22 zwischen diesen Teilen vorgesehen, die beim Ausführungsbeispiel durch eine zentrale, z. B. durchgehend ausgebildete, Ausnehmung 22a im Federteller 12 und einen mit Einführungsspiel in die Ausnehmung 22a einfassenden Zapfen 22b gebildet ist, der vorzugsweise einteilig vom Radträger 16 nach oben absteht. Die Spannung der Tragfeder 14 gewährleistet es, dass der Zapfen 22b im Fahrbetrieb in der Ausnehmung 22a verbleibt.

Durch die Spannung der Tragfeder 14 und die dadurch erzeugte Reibung zwischen dem Federteller 12 und dem Radträger 16 ist auch eine kraftschlüssig wirksame Drehsicherung für den Federteller 12 gebildet. Beim Ausführungsbeispiel ist zusätzlich auch eine formschlüssig wirksame Drehsicherung 24 für den Federteller vorgesehen, die z. B. dadurch gebildet sein kann, dass die Ausnehmung 22a und der Zapfen 22b eine unrunde Querschnittsform aufweisen, z. B. eine viereckige oder längliche Querschnittsform. Wie aus den Figuren zu entnehmen ist, weisen die Ausnehmung 22a und der Zapfen 22b außerdem eine aufwärts konvergente, z. B. keilförmige, Querschnittform auf, die eine einfache Montage des Federtellers 12 durch ein Aufsetzen von oben gewährleistet.

Die Tragfeder 14 ist durch eine Druckfeder in Wendelform gebildet. Grundsätzlich ist aber auch ein Luftfederbalg möglich. Die Steigung der dem Federteller 12 benachbarten Endwendel 14a ist bogenförmig auf etwa Null verringert, sodass das Ende oder ein Endabschnitt der Endwendel 14a sich im Wesentlichen in einer rechtwinklig zur Mittelachse 26 erstreckenden Ebene erstreckt. Um dabei eine Anlage der Endwendel 14a möglichst großer Länge zu erhalten, ist zur Anlage der Endwendel 14a am Federteller 12 eine Anlagefläche 28 am Federteller 12 bzw. Basisteil 20 ausgebildet, die an die Bogenform b der sich bogenförmig auf etwa Null verringernden Steigung angepasst ist und sich auf einer möglichst langen Feder-Umfangslänge erstreckt, die sich über z. B. etwa 180° bis etwa 270° erstreckt. Diese Anlagefläche 28 ist vorzugsweise durch die Grundfläche einer bogenförmigen Nut 30 gebildet, wobei die Nutgrundfläche 30a an die Rundung der Mantelfläche der Endwendel 14a angepasst ist. Hierdurch wird eine großflächige Anlagefläche 28 geschaffen, an der die Endwendel 14a mit verhältnimäßig geringer Flächenpressung anliegt.

Durch den Eingriff der Endwendel 14a in die bogenförmige Nut 30 wird auch eine zwischen dem Federteller 12 und der Tragfeder 14 formschlüssig wirksame Zentriervorrichtung 32 geschaffen.

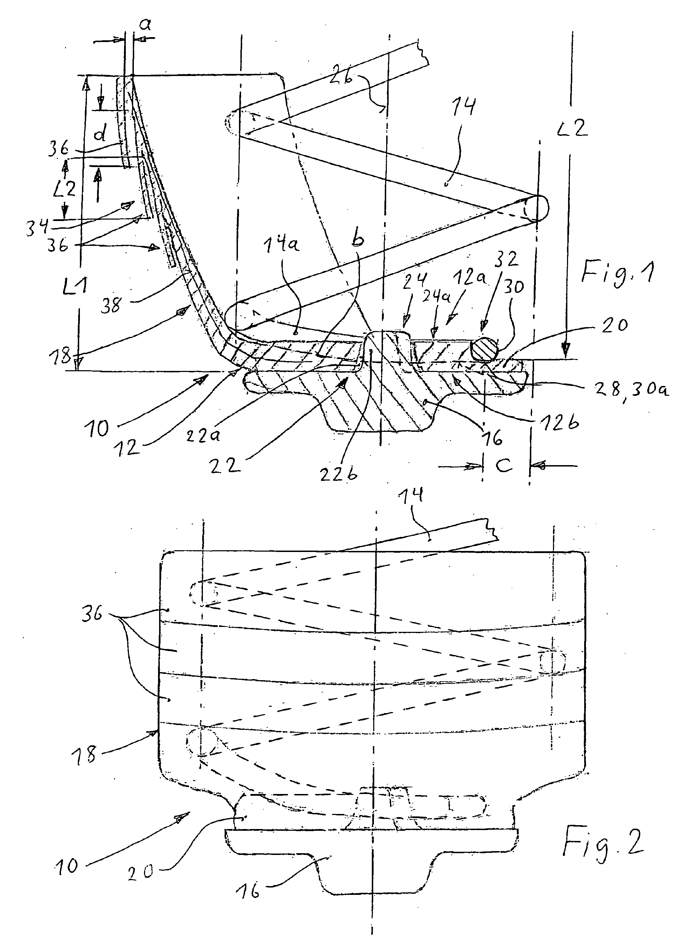

Wie Fig. 1 erkennen lässt, kann die Querschnittsabmessung der Endwendel 14a bezüglich den übrigen Querschnittsabmessungen der Wendeln um das radiale Maß c verringert sein. Diese Ausgestaltung ermöglicht es auch, die zugehörige Querschnittsabmessung des Basisteils 20 kleiner auszubilden als die Querschnittsabmessung der Tragfeder 14, wie Fig. 1 und 2 zeigen.

Da die Nut 30 mit ihrer Nutgrundfläche zu ihrem Nutende hin geneigt ist und die Nutendfläche das Ende der Endwendel 14a begrenzt, ist hierdurch auch eine zwischen dem Federteller 12 und der Tragfeder wirksame Drehsicherung 24a gebildet, die formschlüssig wirksam ist.

Die Schutzwand 18 weist auf ihrer Außenseite einen zusätzlichen Prallschutz auf, der die Wucht von bei der Fahrt aufprallenden Teilchen, z. B. Steine oder Schotter, reduziert. Der Prallschutz ist durch einen oder mehrere, vorzugsweise übereinander, angeordnete Außenschutzwände 34 gebildet, die in einem Abstand a vor der Außenfläche angeordnet sind und stellenweise bzw. punktionell oder linear mit der Schutzwand verbunden sind. Hierdurch ist die wenigstens eine Vorhangwand 34 auf dem grössten Teil ihrer Fläche hohl. Beim Ausführungsbeispiel sind die Außenschutzwände 34 an ihren oberen Rändern horizontal und linear mit der Schutzwand 18 einteilig verbunden, wobei sie herabhängen. Aufgrund des Abstands a sind die Außenschutzwände 34 elastisch nachgiebig, wodurch beim Aufprall von Teilchen während der Fahrt ein Großteil der Aufprallenergie der Teilchen abgebaut wird und der Verschleiß an der wenigstens einen Außenschutzwand 34 gering ist. Der Wandkörper der Schutzwand 18 wird dadurch wesentlich geringer beansprucht, wodurch deren Lebensdauer verlängert wird. Außerdem erhält die Schutzwand eine größere Formstabilität.

Wenn mehrere übereinander angeordnete Außenschutzwände 34 vorhanden sind, ist es besonders vorteilhaft, deren vertikale Länge L2 so groß auszubilden, dass die einander zugewandten Enden bzw. Ränder der Außenschutzwände 34 in einer Höhe angeordnet sind oder einander überlappen. Beim Ausführungsbeispiel sind drei übereinander angeordnete Außenschutzwände 34 vorgesehen, die die Schutzwand 18, deren Dicke sich zu ihrem freien Rand hin verringert, in ihrem dünneren Bereich schützen.

Der vorzugsweise einteilige Federteller 12 kann insgesamt aus einem elastischen Material bestehen, dessen Elastizität so groß ist, dass es bei Gewährleistung einer formstabilen Festigkeit nach einer Verformung wieder in seine Ausgangsform zurückkehrt. Dabei kann die Elastizität des Basisteils 20 größer sein als die der Schutzwand 18. Die Elastizität des Basisteils kann aber auch gleich oder weicher sein, im Regelfall jedoch größer als die der Schutzwand. Ein elastisches Basisteil 20 erfüllt die Funktion eines elastischen Dämpfungselements für die Radaufhängung, das den Schall und Impulse bzw. Druckstöße reduziert.

Der Federteller 1 mit der Schutzwand 18 eignet sich besonders für eine Hinterachse, bei der die Tragfeder 14 besonders gegen Schotterbeschuss und Steinschlag geschützt werden soll. Der Federteller 12 besteht vorzugsweise aus Kunststoff oder Gummi. Er ist insbesondere ein Spritzgießteil.

Um unterschiedliche Materialeigenschaften für das Basisteil 20 einerseits und die Schutzwand 18 andererseits zu verwirklichen, ist es vorteilhaft, diese Abschnitte aus Werkstoffen, unterschiedlicher Elastizität herzustellen, z. B. durch ein Zweikomponentenverfahren, insbesondere mit zwei Kunststoffen unterschiedlicher Elastizität einteilig als Spritzgießteil herzustellen. Im Regelfall ist die Elastizität des Basisteils größer als die Elastizität der Schutzwand.

Zur Vergrößerung der Formstabilität ist es vorteilhaft, die Schutzwand 18 durch eine Armierung zu verstärken. Hierzu können Fasern oder Einlegeteile 38 wie z. B. Drähte dienen, von denen in Fig. 1 einer dargestellt ist. Auf der in Fig. 2 sichtbaren Breite können mehrere etwa vertikale Einlegeteile 38 verteilt angeordnet sein.

### BEZUGSZEICHENLISTE

- 10: Tragfederanordnung
- 12: Federteller
- 12a: Federanlageseite
- 12b: Widerlagerseite
- 14: Tragfeder
- 14a: Endwendel
- 16: Radträger
- 18: Schutzwand
- 20: Basisteil
- 22: Zentriervorrichtung
- 22a: Zentrierausnehmung
- 22b: Zentrierzapfen
- 24: Drehsicherung
- 24a: Drehsicherung
- 26: Mittelachse
- 28: Anlagefläche
- 30: Nut
- 30a: Nutgrundfläche
- 32: Zentriervorrichtung
- 34: Prallschutz
- 36: Außenschutzwände
- 38: Einlegeteile

- a: Abstand
- b: konvexe Form
- c: Maß
- d: Abstand
- L1: Teillänge
- L2: Länge

## Patentansprüche

1. Tragfederanordnung (10) für Kraftfahrzeuge mit einer Federauflage (16) unter Zwischenlage einer Federunterlage (12) sich axial abstützenden Feder (14), **dadurch gekennzeichnet, dass** zum Schutz der Feder (14) vor Steinschlag der unteren Federunterlage (12) eine in Fahrrichtung des Kraftfahrzeuges vor der Feder (14) befindliche sich nach oben und wenigstens über eine Teillänge (L1) der wirksamen Länge (L2) der Feder (14) erstreckende, um eine Mittelachse (26) der Tragfederanordnung (10) gekrümmte Schutzwand (18) drehgesichert zugeordnet ist.

2. Tragfederanordnung nach Anspruch 1, **dadurch gekennzeichnet, dass** die Federunterlage (12) als Basisteil (20) mit der Schutzwand (18) einteilig ausgebildet ist.

3. Tragfederanordnung nach Anspruch 1 oder 2, **dadurch gekennzeichnet, dass** das die Drehsicherung durch eine dem Basisteil (20) zugeordnete, der Bogenform des Endwendels (14a) der Feder (14) angepasste Anlagefläche (28) gebildet ist, an welcher der Endwendel (14a) der Feder (14).

4. Tragfederanordnung nach Anspruch 1 oder 2, **dadurch gekennzeichnet, dass** die Drehsicherung durch einen zentrischen, aber unrunden, mit einer damit korrespondierenden Ausnehmung (22a) des Basisteils (20) zusammenwirkenden Zapfen (24) des Radträgers (16) gebildet ist.

5. Tragfederanordnung nach Anspruch 4, **dadurch gekennzeichnet, dass** die formschlüssige Verdrehsicherung (24) durch einen unrunden Zapfen (22b) und einer korrespondierenden Federunterlage (12) gebildet ist.

6. Tragfederanordnung nach Anspruch 3, **dadurch gekennzeichnet, dass** die die Drehsicherung bildende Endwendel (14a) der Schraubfeder (14) zu ihrem freien Ende hin mit einer konvexen Bogenform (b) etwa gegen 0 verringert ist und dass auf der Federanlageseite (12a) des Basisteils (20) eine Nut angeordnet ist, deren Nutgrundfläche (30a) an die Bogenform (b) angepasst ist und deren Nutendfläche das freie Ende der Endwendel (14a) begrenzt.

7. Tragfederanordnung nach Anspruch 1 oder 2, **dadurch gekennzeichnet, dass** die Schutzwand (18) etwa gleich breit oder breiter ist als das Basisteil (20) und ihre Dicke sich zu ihrem freien Rand hin verringert.

8. Tragfederanordnung nach Anspruch 7, **dadurch gekennzeichnet, dass** die Elastizität des Basisteils (20) größer ist oder gleich wie die der Schutzwand (18) ist.

9. Tragfederanordnung nach einem der vorangehenden Ansprüche, **dadurch gekennzeichnet, dass** am oberen Rand der Schutzwand (18) ein oder mehrere nebeneinander angeordnete Außenschutzwände (36) der Länge (d) in einem Abstand (a) von der Außenfläche der Schutzwand (18) zugeordnet sind, die jeweils an punktuellen oder linienförmigen Verbindungsstegen mit der Schutzwand (18) verbunden sind.

## Claims

1. Supporting spring assembly (10) for motor vehicles, having a spring (14) which is supported axially on a spring rest (16) with the intermediate positioning of a spring mount (12), **characterized in that**, in order to protect the spring (14) against being struck by stones, a protective wall (18), which is located in front of the spring (14) in the direction of travel of the motor vehicle, extends upward and at least over part (L1) of the effective length (L2) of the spring (14) and is curved about a centre axis (26) of the supporting spring assembly (10), is assigned in a rotationally secured fashion to the lower spring mount (12).

2. Supporting spring assembly according to Claim 1, **characterized in that** the spring mount (12) is embodied as a base part (20) in one piece with the protective wall (18).

3. Supporting spring assembly according to Claim 1 or 2, **characterized in that** the rotationally-securing means are formed by a bearing face (28) which is assigned to the base part (20), is adapted to the curved shape of the final helix (14a) of the spring (14) and on which the final helix (14a) of the spring (14) bears.

4. Supporting spring assembly according to Claim 1 or 2, **characterized in that** the rotationally-securing means are formed by a central, but non-round pin (24) of the wheel carrier (16), which pin (24) interacts with a recess (22a), corresponding to the rotationally-securing means, in the base part (20).

5. Supporting spring assembly according to Claim 4, **characterized in that** the positively locking rotation-preventing means (24) are formed by a non-round pin (22b) and a corresponding spring mount (12).

6. Supporting spring assembly according to Claim 3, **characterized in that** the final helix (14a), forming the rotationally-securing means, of the helical spring (14) is reduced approximately to 0 at its free end with a convex arcuate shape (b), and **in that** a groove, whose groove base face (30a) is adapted to the arcuate shape (b) and whose groove end face bounds the free end of the final helix (14a), is arranged on the spring bearing side (12a) of the base part (20).

7. Supporting spring assembly according to Claim 1 or 2, **characterized in that** the protective wall (18) is approximately as wide as or wider than the base part (20) and its thickness decreases towards its free edge.

8. Supporting spring assembly according to Claim 7, **characterized in that** the elasticity of the base part (20) is greater than or equal to that of the protective wall (18).

9. Supporting spring assembly according to one of the preceding claims, **characterized in that**, at the upper edge of the protective wall (18), one or more outer protective walls (36) which are arranged one next to the other and have a length (d) are assigned at a distance (a) from the outer face of the protective wall (18) and are each connected to the protective wall (18) at punctiform or linear connecting webs.

## Revendications

1. Agencement de ressort de support (10) pour véhicules automobiles, comprenant un ressort (14) s'appuyant axialement sur un appui de ressort (16) en interposant une base de ressort (12), **caractérisé en ce que**, pour protéger le ressort (14) contre les impacts de pierres, on associe à la base inférieure du ressort (12), de manière fixée en rotation, une paroi de protection (18) cintrée autour d'un axe médian (26) de l'agencement de ressort de support (10), s'étendant vers le haut et au moins sur une longueur partielle (L1) de la longueur efficace (L2) du ressort (14), et située, dans la direction de conduite du véhicule automobile, avant le ressort (14).

2. Agencement de ressort de support selon la revendication 1, **caractérisé en ce que** la base de ressort (12) est réalisée sous forme de partie de base (20) d'une seule pièce avec la paroi de protection (18).

3. Agencement de ressort de support selon la revendication 1 ou 2, **caractérisé en ce que** la fixation en rotation est formée par une surface d'appui (28) adaptée à la forme cintrée de la spire d'extrémité (14a) du ressort (14), associée à la partie de base (20), contre laquelle s'applique la spire d'extrémité (14a) du ressort (14).

4. Agencement de ressort de support selon la revendication 1 ou 2, **caractérisé en ce que** la fixation en rotation est formée par un tourillon (24) du support de roue (16) coopérant avec un évidement (22a) de la partie de base (20) coopérant avec elle, central mais non rond.

5. Agencement de ressort de support selon la revendication 4, **caractérisé en ce que** la fixation en rotation (24) par engagement par correspondance géométrique est formée par un tourillon non rond (22b) et une base de ressort (12) correspondante.

6. Agencement de ressort de support selon la revendication 3, **caractérisé en ce que** la spire d'extrémité (14a) du ressort à boudin (14) formant la fixation en rotation est réduite à son extrémité libre approximativement à 0 avec une forme d'arc convexe (b), et **en ce qu'**une rainure est prévue du côté de l'appui de ressort (12a) de la partie de base (20), dont la base de rainure (30a) est adaptée à la forme en arc (b) et dont la surface d'extrémité de rainure limite l'extrémité libre de la spire d'extrémité (14a).

7. Agencement de ressort de support selon la revendication 1 ou 2, **caractérisé en ce que** la paroi de protection (18) est approximativement aussi large ou plus large que la partie de base (20) et son épaisseur est réduite jusqu'à son bord libre.

8. Agencement de ressort de support selon la revendication 7, **caractérisé en ce que** l'élasticité de la partie de base (20) est supérieure ou égale à celle de la paroi de protection (18).

9. Agencement de ressort de support selon l'une quelconque des revendications précédentes, **caractérisé en ce que** sur le bord supérieur de la paroi de protection (18), sont disposées une ou plusieurs parois de protection extérieures (36) de longueur (d), disposées les unes à côté des autres, à une distance (a) de la surface extérieure de la paroi de protection (18), lesquelles sont connectées à chaque fois au niveau de nervures de liaison ponctuelles ou linéaires, à la paroi de protection (18).
